# FASCICULE DE BREVET EUROPEEN

(11) **EP 1 322 496 B1**
(45) Date de publication et mention de la délivrance du brevet: **09.07.2008**
(21) Numéro de dépôt: 01976369.7
(22) Date de dépôt: 05.10.2001
(51) Int. Cl.: B60R 13/00, B62D 29/04, B60R 13/04, B29C 45/00

(54) **PIECE DE CARROSSERIE MUNIE D'UN DECOR EN PARTIE CENTRALE**
KAROSSERIETEIL MIT DEKORATIVEM MITTELTEIL
BODY PART PROVIDED WITH A DECORATIVE ELEMENT IN ITS CENTRAL PART ZONE

(30) Priorité: 06.10.2000 FR 0012803; 06.10.2000 FR 0012804
(43) Date de publication de la demande: 02.07.2003
(73) Titulaire: RENAULT S.A.S., 92100 Boulogne Billancourt (FR); COMPAGNIE PLASTIC OMNIUM, 69007 Lyon (FR)
(72) Inventeur: GILLE, Denis, F-01100 Bellignat (FR); DELWAL, Fabien, F-01000 Bourg-en-Bresse (FR); LIADOUZE, Alain, F-78530 Buc (FR)
(74) Mandataire: Remy, Vincent Noel Paul
(86) Numéro de dépôt international: PCT/FR2001/003085
(87) Numéro de publication internationale: WO 2002/028685

(56) Documents cités:
- EP-A- 0 953 423
- FR-A- 2 758 121
- FR-A- 2 773 349
- GB-A- 2 259 883
- US-A- 5 658 041
- US-A- 5 960 527
- PATENT ABSTRACTS OF JAPAN vol. 015, no. 336 (M-1151), 26 août 1991 (1991-08-26) & JP 03 130119 A (TOYODA GOSEI CO LTD), 3 juin 1991 (1991-06-03)
- PATENT ABSTRACTS OF JAPAN vol. 1996, no. 02, 29 février 1996 (1996-02-29) & JP 07 276395 A (SINTOKOGIO LTD), 24 octobre 1995 (1995-10-24)

## Description

La présente invention concerne une pièce de carrosserie de véhicule automobile, notamment un bouclier, obtenue par injection de matière plastique dans un moule et munie d'un décor en partie centrale.

Le spécialiste des pièces de carrosserie sait que, lorsque ces dernières sont réalisées en matière plastique, il est pratiquement inévitable, en l'état actuel des techniques d'injection et/ou d'aspiration, d'éviter l'apparition de défauts dans leurs zones planes ou sensiblement planes.

Une fois revêtues de leur couche de peinture, et éventuellement de vernis, de telles pièces ne présentent plus les défauts de surface précités car ils sont dissimulés sous la peinture.

Cependant, lorsqu'il s'agit de réaliser un décor en partie centrale de la pièce, apparaît la difficulté supplémentaire consistant à maroufler la pièce à la périphérie de sa zone centrale devant recevoir le décor.

En outre, la réalisation du décor par peinture en zone centrale limite les possibilités esthétiques à un choix de couleurs et de brillances.

Il est déjà connu de revêtir des pièces de carrosserie de véhicules automobiles avec des films décors remplaçant la traditionnelle couche de peinture.

Les surfaces à recouvrir étant généralement non développables, une préparation du film est requise, par thermoformage, afin de lui conférer la configuration adéquate à son application contre l'empreinte du moule, faute de quoi le film se déchirerait ou s'étirerait lors du surmoulage, une surface développable signifiant que ladite surface peut être appliquée contre un plan sans subir d'allongement dans aucune direction. Un exemple de préformage de film est décrit dans EP 0 953 423.

Un des avantages résultant du thermoformage du film est que ce dernier se positionne et se maintient presque automatiquement en place dans le moule, du fait qu'il ne connaît qu'une seule position stable, à savoir celle dans laquelle il épouse parfaitement l'empreinte du moule.

En revanche, un inconvénient est qu'une telle préparation du film nécessite des moyens importants et consomme du temps de préparation qui grève lourdement le prix des pièces de carrosserie ainsi obtenues.

De plus, parmi les dégradation que le film peut subir lors de l'injection de la matière plastique, on peut citer les retassures résultant de la présence du canal d'injection de matière situé au dos du film, c'est-à-dire sur sa face invisible.

Il convient de rappeler que, comme cela est bien connu de l'homme du métier, le positionnement du canal d'injection au dos du film est une contrainte qui s'impose à la technique de surmoulage de films développables, du fait que ces derniers ne peuvent être fermement plaqués contre l'empreinte du moule. Ainsi, avec un canal d'injection placé en dehors de la surface du film, la matière plastique injectée progresse dans le moule parallèlement à la surface du film et aborde ce dernier dans son épaisseur, de sorte qu'elle peut s'engouffrer très facilement entre ledit film et l'empreinte du moule, et déplacer ou emporter le film en un autre endroit du moule.

Par conséquent, il est admis que le surmoulage d'un film ne peut se pratiquer qu'en injectant la matière directement au dos du film, afin de commencer par le plaquer on position avant de le soumettre à d'éventuelles forces transversales susceptibles de le déplacer ou de le décoller de l'empreinte.

Une autre cause de dégradation du film peut être le moyen de maintien du film dans le moule.

Dans l'hypothèse d'un maintien électrostatique, aucune marque n'est à craindre.

En revanche, lorsque le film est maintenu par aspiration, chaque buse d'aspiration laisse sur le film une légère marque.

Comme pour le problème de l'injection au dos du film, le maintien du film en position lors de l'injection apparaît également comme une contrainte incontournable compte tenu du caractère développable du film.

La présente invention vise à proposer une nouvelle pièce de carrosserie présentant un décor en partie centrale mais dont la réalisation ne nécessite aucun marouflage et qui offre de très nombreuses possibilités esthétiques en comparaison avec les pièces peintes.

Le présente invention vise à fournir une nouvelle pièce de carrosserie en matière plastique qui bénéficie de la technique de décoration par film sans en présenter les inconvénients.

Selon une caractéristique de l'invention, la partie centrale présente une section sensiblement rectiligne, comporte une surface développable, et est recouverte par un film surmoulé dont la périphérie délimite strictement ladite zone centrale.

Selon une autre caractéristique de l'invention, le film surmoulé comporte des zones texturées sur sa face visible tournée vers l'extérieur de la pièce, au droit de régions de sa face invisible tournée vers l'intérieur de la pièce dans lesquelles le film a subi des dégradations lors de l'injection de la matière plastique dans le moule.

Selon une autre caractéristique de l'invention, les zones texturées sont des zones du film présentant un aspect de surface différent du reste du film.

Selon une autre caractéristique de l'invention, l'aspect de surface différent est réalisé par un grainage.

Selon une autre caractéristique de l'invention, la périphérie du film est en retrait des bords de ladite pièce.

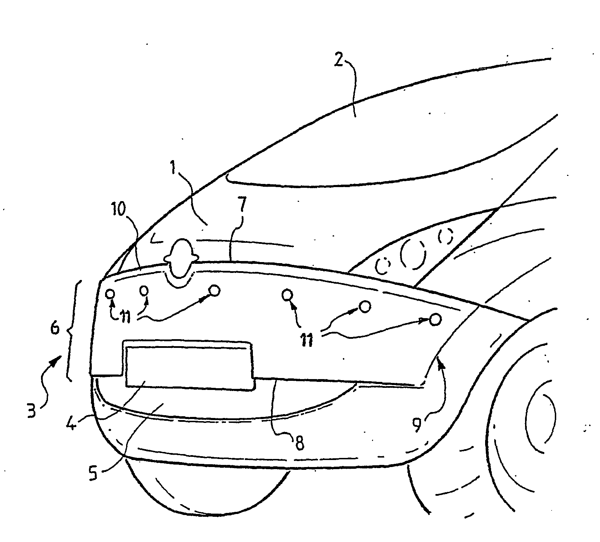

Afin de faciliter la compréhension de l'invention, un exemple de réalisation va maintenant en être décrit à partir de la figure unique annexée qui représente l'avant d'un véhicule automobile.

L'avant de ce véhicule est constitué par un capot 1 prolongeant un pare-brise 2 Jusqu'à un bouclier 3 qui s'étend sensiblement verticalement Jusqu'en partie inférieure de la caisse du véhicule.

Le bouclier 3 comporte une zone porte-plaques 4 et une prise d'air 5.

La zone centrale 6 du bouclier est située entre son bord supérieur 7 voisin du capot 1 et le bord supérieur 8 de la prise d'air 5.

Ainsi qu'on le voit sur la gauche de la figure, grâce à sa section sensiblement rectiligne, la zone centrale 6 de la pièce de carrosserie selon l'invention présente une forme cylindrique, au sens mathématique de ce terme, c'est-à-dire qu'elle est engendrée par une droite qui se déplace parallèlement à elle-même en s'appuyant sur une courbe directrice, de sorte qu'elle est développable.

La courbe directrice peut être une droite, auquel cas la partie centrale forme une facette plane. Si la courbe directrice est une portion de cercle, d'ellipse ou, de manière plus générale, de conique, la partie centrale est bombée.

En d'autres termes, la zone centrale du bouclier a la forme d'une bande incurvée dont la concavité est tournée vers l'arrière du véhicule.

La zone centrale reçoit un film 9 de revêtement du type SOLVANT CAST ou co-extrudé ou PLAXAGE. Ce film 9 peut être facilement surmoulé sur la pièce du fait que ladite zone centrale 6 présente une forme développable. Le film peut en effet s'adapter à la forme du moule d'injection du bouclier 3 sans s'étirer ni se déchirer.

Le film 9 est découpé et appliqué dans le moule d'injection du bouclier de manière telle que la périphérie 10 du film demeure en retrait des bords 7 du bouclier et laisse subsister une bande de matière plastique brute ou teintée dans la masse qui tranche entre la couleur de la peinture réalisée sur le capot 1 et la couleur du film.

Les éventuels problèmes de concordance de couleur sont ainsi moins facilement décelables.

Comme on le voit sur la figure, le film 9 comporte des zones 11 texturées régulièrement réparties au voisinage du bord supérieur du film.

On entend par zones texturées des zones du film présentant un aspect de surface différent du reste du film, lequel est généralement lisse et brillant. Par exemple, les zones texturées peuvent être grainées ou hachurées.

Ces zones texturées sont destinées à dissimuler les parties faiblement endommagées par l'injection et sont simplement réparties sur le film de manière à donner un effet esthétique masquant leur fonction technique.

Par exemple, chacune de ces zones 11 dissimule une retassure due à la présence d'un canal d'injection de matière dans le moule de réalisation du bouclier.

L'exemple fourni ci-dessus ne constitue en rien une limitation de la portée de l'invention, laquelle est définie par les revendications annexées.

En particulier, il est clair que l'invention concerne aussi bien des pièces avant que des pièces arrière du véhicule, notamment son bouclier arrière.

## Revendications

1. Pièce de carrosserie de véhicule automobile obtenue par injection de matière plastique dans un moule, comportant une partie centrale (6) munie d'un décor, **caractérisée en ce que** ladite partie centrale (6) présente une section sensiblement rectiligne, comporte une surface developable et est recouverte par un film (9) surmoulé dont la périphérie (10) délimite strictement ladite zone centrale (6).

2. Pièce de carrosserie selon la revendication 1 **caractérisée en ce que** le film (9) comporte des zones (11) texturées sur sa face visible tournée vers l'extérieur de la pièce, au droit de régions de sa face invisible tournée vers l'intérieur de la pièce dans lesquelles le film a subi des dégradations lors de l'injection de la matière plastique dans le moule.

3. Pièce de carrosserie selon la revendication précédente, **caractérisée en ce que** les zones texturées (11) sont des zones du film (9) présentant un aspect de surface différent du reste du film (9).

4. Pièce de carrosserie selon la revendication précédente, **caractérisé en ce que** l'aspect de surface différent est réalisé par un grainage.

5. Pièce de carrosserie selon la revendication 1, **caractérisée en ce que** la périphérie du film (9) est en retrait par rapport à des bords (7) de ladite pièce.

## Claims

1. A motor vehicle bodywork part obtained by injecting plastics material into a mold, the part including a central portion (6) provided with decoration and being **characterized in that** said central portion (6) presents a section that is substantially rectilinear, comprises a surface that can be developed, and is covered in an over-molded film (9) of periphery (10) that strictly defines said central portion (6).

2. A bodywork part according to claim 1, **characterized in that** the film (9) includes textured zones (11) on its visible face directed towards the outside of the part, in register with regions of its invisible face turned towards the inside of the part, in which regions the films have been subjected to degradation during injection of the plastics material into the mold.

3. A bodywork part according to the preceding claim, **characterized in that** the textured zones (11) are zones of the film (9) that present a surface appearance different from the remainder of the film (9).

4. A bodywork part according to the preceding claim, **characterized in that** the different surface appearance is made by embossing.

5. A bodywork part according to claim 1, **characterized in that** the periphery of the film (9) is set back from the edges (7) of said part.

## Patentansprüche

1. Karosserieteil eines Kraftfahrzeugs, das durch Einspritzen von Kunststoff in eine Form hergestellt wurde und das einen mit einem Dekor versehenen mittleren Bereich (6) aufweist, **dadurch gekennzeichnet, dass** der mittlere Bereich (6) einen im Wesentlichen geradlinigen Abschnitt mit einer abwickelbaren Oberfläche aufweist und von einer aufgegossenen dünnen Schicht (9) bedeckt ist, deren Außenrand (10) den mittleren Bereich (6) eindeutig begrenzt.

2. Karosserieteil nach Anspruch 1, **dadurch gekennzeichnet, dass** die dünne Schicht (9) auf ihrer nach außen weisenden sichtbaren Fläche texturierte Bereiche (11) aufweist, die sich senkrecht zu Bereichen seiner nach innen weisenden unsichtbaren Fläche des Teils befinden, in denen sich die Qualität der dünnen Schicht beim Einspritzen des Kunststoffs in die Form verschlechtert hat.

3. Karosserieteil nach dem vorhergehenden Anspruch, **dadurch gekennzeichnet, dass** es sich bei den texturierten Bereichen (11) um Bereiche der dünnen Schicht (9) handelt, deren Oberfläche ein von dem Rest der Schicht (9) verschiedenes Aussehen aufweist.

4. Karosserieteil nach dem vorhergehenden Anspruch, **dadurch gekennzeichnet, dass** das unterschiedliche Aussehen der Oberfläche durch Körnung erzielt wurde.

5. Karosserieteil nach Anspruch 1, **dadurch gekennzeichnet, dass** sich der Außenrand der dünnen Schicht (9) in Bezug auf die Ränder (7) des Teils vertieft angeordnet befindet.
